# EUROPÄISCHE PATENTANMELDUNG

(11) **EP 1 650 142 A1**
(43) Veröffentlichungstag der Anmeldung: **26.04.2006**
(21) Anmeldenummer: 05450160.6
(22) Anmeldetag: 04.10.2005
(51) Int. Cl.: B65G 17/42, B65G 19/24

(54) **Mitnehmeranordnung**

(30) Priorität: 21.10.2004 DE 102004051375
(71) Anmelder: PEWAG AUSTRIA GmbH, 8020 Graz (AT)
(72) Erfinder: Pengg, Ägyd, 9220 Velden (AT)
(74) Vertreter: Patentanwaltskanzlei Matschnig

(57) **Zusammenfassung**

Mitnehmeranordnung zum Befestigen eines Bauteils, beispielsweise eines Bechers (BEC), an einer Rundstahlkette (KET), bestehend aus zumindest einem Klemmteilpaar (KLP, KLP1, KLP2), das im montierten Zustand beiderseits der Hauptebene (ε) eines stehenden Kettengliedes (SKG, SKG1, SKG2) der Rundstahlkette (KET) angeordnet ist, wobei das Klemmteilpaar (KLP1, KLP2) aus zwei im wesentlichen gleich ausgebildeten Klemmteilen (KLE, KLE1, KLE2) besteht, die über ein Verbindungsmittel (VER) miteinander verbindbar sind, das Klemmteil (KLE, KLE1, KLE2) einen in der Öffnung des Kettengliedes (SKG, SKG1, SKG2) liegenden Kernteil (KER, KER1, KER2) besitzt, der sich zu einem verbreiterten Stützteil (STU, STU1, STU2) mit Abstützflächen (ABS, ABS1, ABS2) für benachbart liegende Kettenglieder (LKG1, LKG2) erweitert, und die Ausgestaltung des Kernteils (KER, KER1, KER2) ein Verdrehen des Klemmteilpaares (KLP, KLP1, KLP2) bezüglich des stehenden Kettengliedes (SKG, SKG1, SKG2) um einen Winkel (2α) erlaubt, und an den Stützteil (STU, STU1, STU2) ein Arm (ARM, ARM1, ARM2) anschließt, der zunächst im wesentlichen parallel zur Hauptebene (ε) verläuft und dann über eine Abkröpfung (ABK, ABK1, ABK2) in ein Anschlusselement (ANS, ANS1, ANS2) übergeht, welches in der Hauptebene (ε), jedoch in einem Abstand (a) von der Quermittenebene (q) liegt und im montierten Zustand ein freier Weg (d) zwischen dem stehenden Kettenglied (SKG, SKG1, SKG2) und der Abkröpfung (ABK, ABK1, ABK2) verbleibt.

## Beschreibung

Die Erfindung betrifft eine Mitnehmeranordnung zum Befestigen eines Bauteils, beispielsweise eines Bechers, an einer Rundstahlkette, bestehend aus zumindest einem Klemmteilpaar, das im montierten Zustand beiderseits der Hauptebene eines stehenden Kettengliedes der Rundstahlkette angeordnet ist, das Klemmteilpaar aus zwei im wesentlichen gleich ausgebildeten Klemmteilen besteht, die über ein Verbindungsmittel miteinander verbindbar sind, das Klemmteil einen in der Öffnung des Kettengliedes liegenden Kernteil besitzt, der sich zu einem verbreiterten Stützteil mit Abstützflächen für benachbart liegende Kettenglieder erweitert, und die Ausgestaltung des Kernteils ein Verdrehen des Klemmteilpaares bezüglich des stehenden Kettengliedes um einen Winkel 2α erlaubt.

Mitnehmeranordnungen dienen zum Anbringen von Bauteilen wie Kratzer, Becher oder Tragrollen an einer Rundgliederkette. Die Bauteile nehmen das Fördergut zum Weitertransport auf. Bei langen Kettensträngen nehmen Mitnehmeranordnungen keine Kettenzugkräfte auf, sondern übertragen die auftretenden Mitnehmerkräfte (Reibungskräfte, Gewichtskräfte von Bauteil und Fördergut, Fliehkräfte beim Umlenken über Räder bzw. Führungen, etc.) auf die Förderkette.

Um das Umlaufen von Umlenkeinrichtungen zu ermöglichen, sind Mitnehmeranordnungen der eingangs erwähnten Art bekannt geworden, bei welchen die Befestigung von Bechern durch Bolzen erfolgt. Diese Bolzen sind einerseits Verbindungsmittel für die beiden Klemmteile, andererseits sind sie über ein freies Ende mit einer Becherseitenwand verschraubt. Dabei erfolgt die Befestigung an beiden Seitenwänden eines Bechers.

Aufgabe der Erfindung liegt in der Schaffung einer Mitnehmeranordnung, mit welcher ganz allgemein Bauteile auf einfache Art und Weise befestigt werden können, ohne dass die aufwendige Halterung und Führung an zwei Seitenwänden eines Bechers mit Hilfe von zwei parallellaufenden Ketten erforderlich wären.

Diese Aufgabe wird einer Mitnehmeranordnung der eingangs genannten Art dadurch gelöst, dass an den Stützteil ein Arm anschließt, der zunächst im wesentlichen parallel zur Hauptebene verläuft und dann über eine Abkröpfung in ein Anschlusselement übergeht, welches in der Hauptebene, jedoch in einem Abstand von der Quermittenebene liegt und im montierten Zustand ein freier Weg zwischen dem stehenden Kettenglied und der Abkröpfung verbleibt.

Beim Einlaufen eines auf einer Förderkette befestigten Bauteils, wie beispielsweise eines Bechers, neigen sich - wie bereits oben erwähnt - die Kettenglieder stärker als der Bauteil und Kette bzw. Mitnehmeranordnung werden bei starren Befestigungen erhöhter Belastung ausgesetzt. Durch die Verdrehbarkeit des Klemmteilpaares werden die unterschiedlichen Neigungswinkel von Kettenglied und Bauteil ausgeglichen und dadurch die Belastung reduziert.

Um die Verdrehbarkeit der Mitnehmeranordnung auf einfache Weise zu gewährleisten, weist der Kernteil eine Mantelfläche auf, welche im montierten Zustand im Bereich der Stege des stehenden Kettengliedes in dessen Hauptebene konvex ausgebildet ist und an der Innenfläche der Stege zur Auflage kommt.

Die Belastungsreduktion wird zusätzlich unterstützt, wenn der Klemmteil im Stützteil und Kernteil eine gemeinsame Bohrung zur Aufnahme des Verbindungsmittels aufweist. Die Mittelachse des Verbindungsmittels ist im Wesentlichen jene Achse, um die die Verdrehung des Klemmteilpaares in Bezug auf das stehende Kettenglied erfolgt. In einer bevorzugten Ausführung der Erfindung ist das Verbindungsmittel ein Schraubbolzen mit zugehöriger Mutter. In einer anderen Variante ist das Verbindungsmittel eine Bolzen/Keil-Verbindung.

Bevorzugterweise sind die Anschlussmittel zur Befestigung der Klemmteil an dem Bauelement als Gewindebolzen ausgebildet. Diese werden durch Bohrungen am Bauteil geführt und mit Schraubmuttern gesichert. Durch diese Art der Befestigung der Mitnehmeranordnung kann der Bauteil im Bedarfsfall rasch montiert oder demontiert werden, ohne beispielsweise Schweißarbeiten durchführen zu müssen.

Besonders kostengünstig und einfach in der Montage ist es, wenn das Klemmteilpaar als einstückiges Schmiedeteil ausgebildet ist.

Bei einem großen Bauteil ist es zur gleichmäßigen Lastverteilung notwendig, dass zur Befestigung des Bauteils zwei Klemmteilpaare auf je einem stehenden Kettenglied montierbar sind. Hier hat sich die Erfindung besonders bewährt, weil durch die Verdrehbarkeit des Klemmteilpaares ein ausreichender Ausgleich der unterschiedlichen Neigungswinkel erfolgt und die auf Kette und Anschlusselement wirkende Belastung auf ein Minimum reduziert wird.

Die Erfindung samt weiteren Vorteilen wird im Folgenden anhand eines nicht einschränkenden Ausführungsbeispiels näher erläutert, das in der Zeichnung veranschaulicht ist. In dieser zeigen:
Fig. 1 eine schematische Ansicht eines Klemmteiles von vorne,
Fig. 2 eine Seitenansicht des Klemmteiles aus Fig.1,
Fig. 3 eine teilweise explodierte Ansicht der auf einer Förderkette montierten Mitnehmeranordnung,
Fig. 4 in einer weiteren Ansicht die Befestigung eines Bauteils an der Förderkette,
Fig. 5 den Einsatz der erfindungsgemäßen Mitnehmeranordnung eines Bechers in einer Förderanlage mit unverzahntem Antriebsrad, und
Fig. 6 den Einsatz der erfindungsgemäßen Mitnehmeranordnung eines Bechers in einer Förderanlage mit verzahntem Antriebsrad.

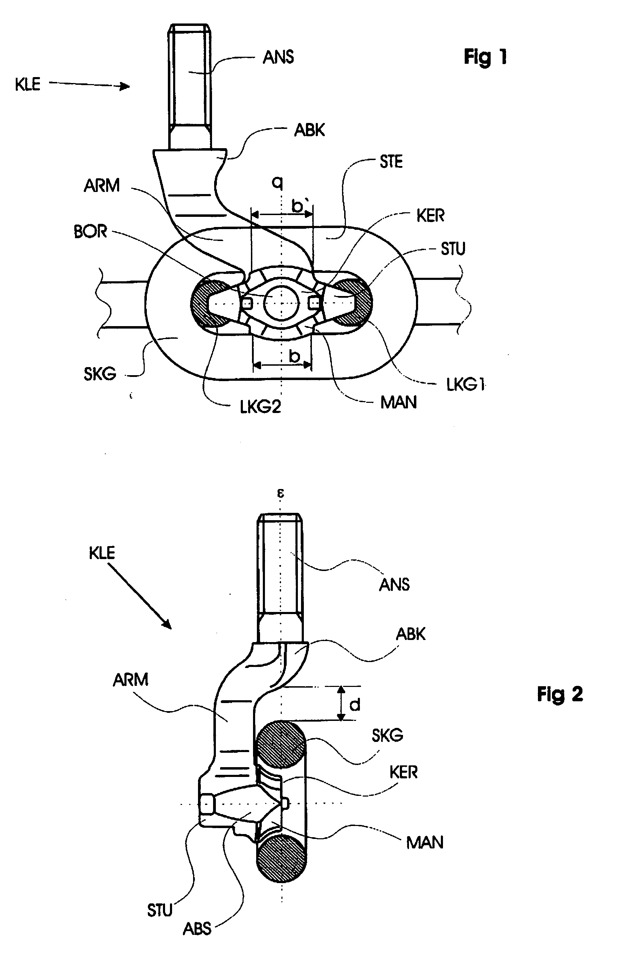

Der in Fig. 1 und Fig. 2 dargestellte Klemmteil KLE verfügt über einen Kernteil KER, der bei der Befestigung des Klemmteiles KLE an einem stehenden Kettenglied SKG in die Öffnung des Kettengliedes SKG ragt. Dabei weist der Kernteil KER eine Mantelfläche MAN auf, welche im Bereich b, b' der Gliedstege STE des stehenden Kettengliedes SKG in dessen Hauptebene ε konkav ausgebildet an diesen zur Anlage kommt. Zusätzlich weist die Mantelfläche MAN in der Quermittenebene q eine konkave, dem Drahtquerschnitt des stehenden Kettengliedes SKG angepasste Krümmung auf, wie deutlich aus Fig. 2 ersichtlich. Dadurch ist eine verbesserte Krafteinleitung in das stehende Kettenglied SKG und ein verminderte Verschleiß gewährleistet.

An den Kernteil KER schließt ein Stützteil STU an. Dieser besitzt Abstützflächen ABS, deren Form an den Kettenbug der benachbarten liegenden Kettenglieder LKG1, LKG2 angepasst ist. Stützteil STU und Kernteil KER weisen eine gemeinsame Bohrung BOR auf, die zur Aufnahme eines Verbindungsmittels dient.

Ein Anschlusselement ANS, das zur Befestigung der Mitnehmeranordnung an einem Bauteil, wie beispielsweise Becher dient, steht über einen Arm ARM, der eine doppelte Abkröpfung ABK auf Seiten des Anschlusselementes ANS aufweist, mit dem Stützelement STU in Verbindung. Die Länge des Armes ARM ist so gewählt, dass im montierten Zustand des Klemmteiles KLE ein freier Weg d zwischen dem stehenden Kettenglied SKG - genauer gesagt der Außenfläche des einen Gliedsteges und der Abkröpfung ABK zur Verfügung steht. Diese Freistellung ist gleichfalls für die Verdrehbarkeit der Mitnehmeranordnung wichtig. In einer bevorzugten Ausführung der Erfindung ist das Anschlusselement ANS als Anschlussbolzen mit Gewinde ausgeführt. Dieser wird durch eine Bohrung des Bauteils geführt und mit Schraubmuttern gesichert.

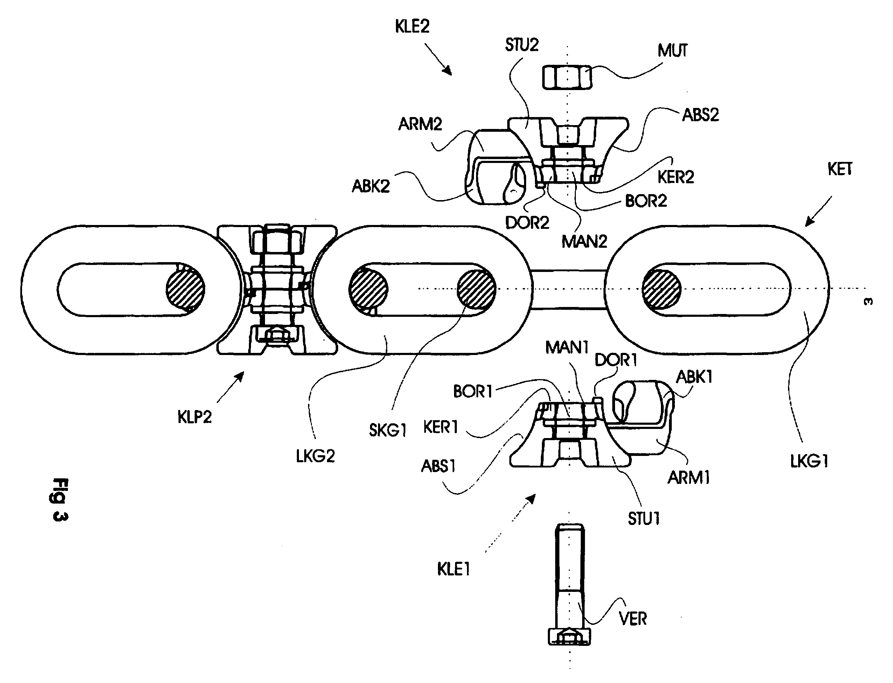

In Fig. 3 ist die Montage der erfindungsgemäßen Mitnehmeranordnung an der Förderkette KET dargestellt. Zwei Klemmteile KLE1, KLE2 werden mit ihren zueinander ausgerichteten Kernteilen KER1, KER2 beidseitig in die Öffnung des stehenden Kettengliedes SKG1 geführt. Dazu weisen die Kernteile KER1, KER2 jeweils einen Dorn DOR1, DOR2 auf, der das Verdrehen der Kernteile KER1, KER2 zueinander verhindert. Die Mantelflächen MAN1, MAN2 der Kernteile KER1, KER2 liegen dabei teilweise auf den Stegen STE des stehenden Kettengliedes SKG1 auf. Die Kernteile KER1, KER2 sind weiters so ausgerichtet, dass ihre Arme ARM1, ARM2 im Wesentlichen parallel zu einer Quermittenebene q angeordnet sind und ihre Stützteile STU1, STU2 mit ihren Abstützflächen ABS1, ABS2 am Kettenbug der benachbarten liegenden Kettenglieder LKG1, LKG2 aufliegen.

Die Klemmteile KLE1, KLE2 werden über ein Verbindungsmittel VER miteinander verbunden und bilden ein Klemmteilpaar KLP, wobei das Verbindungsmittel VER durch die Bohrungen BOR1, BOR2 der Klemmteile KLE1, KLE2 geführt und mit einer Schraubmutter MUT gesichert wird. Das Verbindungsmittel VER ist einer anderen, hier nicht dargestellten Ausführungsform als Bolzen-Keil-Verbindung ausgeführt.

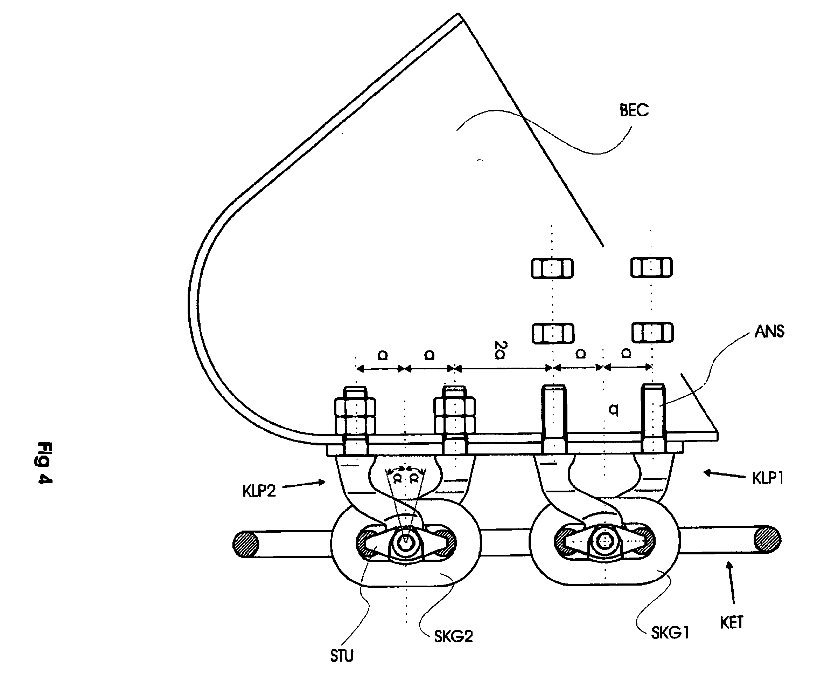

Wie in Fig. 4 dargestellt werden zwei Klemmteilpaare KLP1, KLP2 an zwei stehenden Kettengliedern SKG1, SKG2 der Förderkette KET befestigt. Dabei sind die Anschlusselemente ANS1, ANS2 der Klemmteile KLE1, KLE2 parallel und in einem Abstand a von der Quermittenebene q angeordnet. Die Fixierung der Klemmteilpaare KLP1, KLP2 erfolgt in dieser Ausführungsform über jeweils zwei Schraubmuttern je Klemmteil. In einer bevorzugten Ausführung der Erfindung sind die Bohrungen an der Rückwand des Bechers BEC, durch die die Anschlusselemente ANS1, ANS2 geführt werden, in einem Abstand von 2a zueinander angeordnet. Aufgrund dieser Befestigungsart kann der Becher BEC im Bedarfsfall einfach durch Lösen der Schraubmuttern von der Förderkette KET entfernt und durch einen anderen ersetzt werden.

Mithilfe der oben beschriebenen Mitnehmeranordnung können auch große Bauteile, wie beispielsweise Becher BEC an der Förderkette KET befestigt werden, ohne zusätzliche Maßnahmen bei dem Transport des Bauteils über Umlenk- oder Antriebsräder treffen zu müssen. Solange das Klemmteilpaar KLP1, KLP2 um nicht mehr als einen Winkel α in oder gegen Uhrzeigersinn verdreht wird, kommen keine weiteren Flächen des Klemmteilpaares KLP1, KLP2 mit dem stehenden Kettenglied SKG1 in Berührung, sodass ein Verdrehen des Klemmteilpaares KLP1, KLP2 bezüglich des stehenden Kettenglied SKG1 insgesamt um einen Winkel 2α ermöglicht wird.

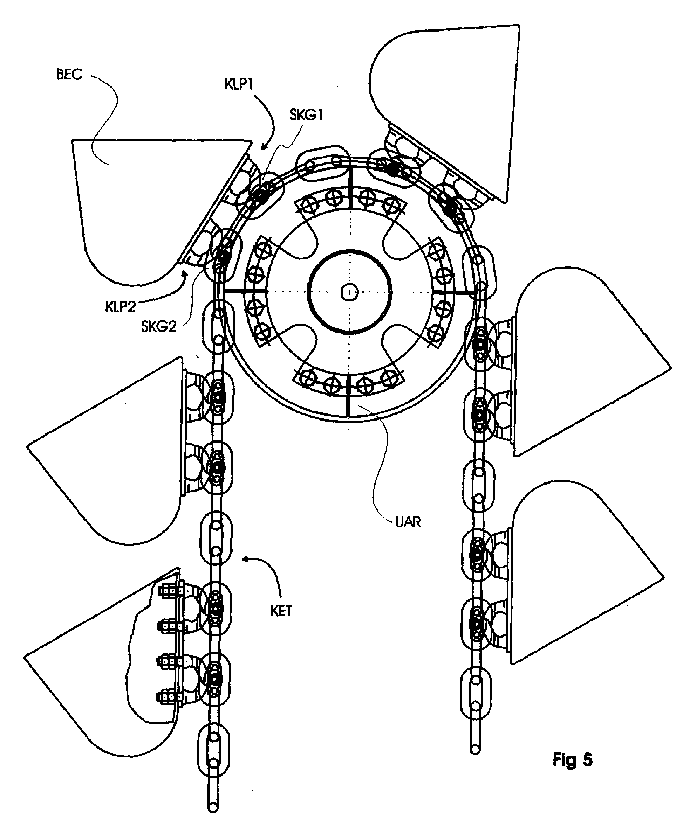

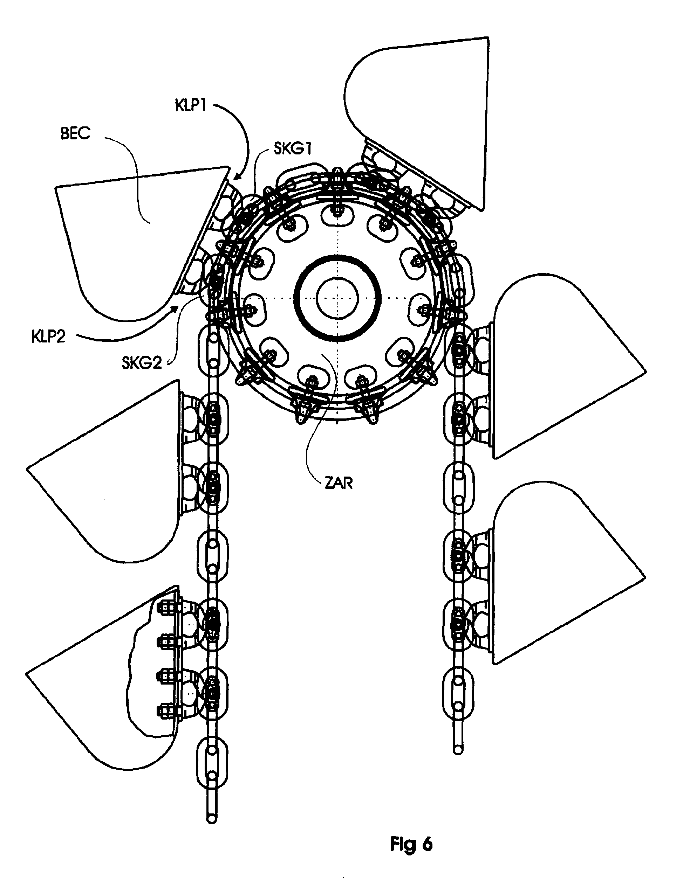

In den Fig. 5 und Fig. 6 wird eine Förderkette KET mit unverzahntem Antriebsrad UAR bzw. verzahntem Antriebsrad ZAR gezeigt. Beim Einlaufen des Bechers BEC auf das Antriebsrad UAR, ZAR neigen sich die stehenden Kettenglieder SKG1, SKG2 stärker als der Becher BEC. Dies verursacht bei starren Mitnehmeranordnungen eine starke Belastung der Förderkette KET bzw. der Anschlusselemente. Bei der erfindungsgemäßen Mitnehmeranordnung hingegen können aufgrund der Verdrehbarkeit der Klemmteilpaare KLP1, KLP2 diese Belastungskräfte ausgeglichen werden. Somit wirken im Bereich von Antriebs- oder Umlenkrädern geringere dynamische Kräfte auf die Förderkette KET und der Mitnehmeranordnung als bei herkömmlichen Befestigungen, und der Verschleiß dieser Teile ist reduziert.

Die oben beschriebene Mitnehmeranordnung ist in nicht einschränkender Weise zu verstehen. So kann die Befestigung der Klemmteile auf jede dem Fachmann bekannte Art erfolgen, die die Verdrehbarkeit der Klemmteile nicht behindert. Ebenso ist der Einsatz der Mitnehmeranordnung nicht auf die Befestigung von Bechern an einer Förderkette beschränkt, sondern für jedes Bauteil geeignet, besonders für Kratzer, Rollen und dergleichen.

## Patentansprüche

1. Mitnehmeranordnung zum Befestigen eines Bauteils, beispielsweise eines Bechers (BEC), an einer Rundstahlkette (KET), bestehend aus zumindest einem Klemmteilpaar (KLP, KLP1, KLP2), das im montierten Zustand beiderseits der Hauptebene (ε) eines stehenden Kettengliedes (SKG, SKG1, SKG2) der Rundstahlkette (KET) angeordnet ist, wobei das Klemmteilpaar (KLP1, KLP2) aus zwei im Wesentlichen gleich ausgebildeten Klemmteilen (KLE, KLE1, KLE2) besteht, die über ein Verbindungsmittel (VER) miteinander verbindbar sind, das Klemmteil (KLE, KLE1, KLE2) einen in der Öffnung des Kettengliedes (SKG, SKG1, SKG2) liegenden Kernteil (KER, KER1, KER2) besitzt, der sich zu einem verbreiterten Stützteil (STU, STU1, STU2) mit Abstützflächen (ABS, ABS1, ABS2) für benachbart liegende Kettenglieder (LKG1, LKG2) erweitert, und die Ausgestaltung des Kernteils (KER, KER1, KER2) ein Verdrehen des Klemmteilpaares (KLP, KLP1, KLP2) bezüglich des stehenden Kettengliedes (SKG, SKG1, SKG2) um einen Winkel (2α) erlaubt,
**dadurch gekennzeichnet, dass**
an den Stützteil (STU, STU1, STU2) ein Arm (ARM, ARM1, ARM2) anschließt, der zunächst im wesentlichen parallel zur Hauptebene (ε) verläuft und dann über eine Abkröpfung (ABK, ABK1, ABK2) in ein Anschlusselement (ANS, ANS1, ANS2) übergeht, welches in der Hauptebene (ε), jedoch in einem Abstand (a) von der Quermittenebene (q) liegt und im montierten Zustand ein freier Weg (d) zwischen dem stehenden Kettenglied (SKG, SKG1, SKG2) und der Abkröpfung (ABK, ABK1, ABK2) verbleibt.

2. Mitnehmeranordnung nach Anspruch 1, **dadurch gekennzeichnet, dass** der Kernteil (KER, KER1, KER2) eine Mantelfläche (MAN) aufweist, welche im montierten Zustand im Bereich der Stege (STE) des stehenden Kettengliedes (SKG, SKG1, SKG2) in dessen Hauptebene (ε) konvex ausgebildet ist und an der Innenfläche der Stege (STE) zur Auflage kommt.

3. Mitnehmeranordnung nach Anspruch 1 oder 2, **dadurch gekennzeichnet, dass** der Klemmteil (KLE, KLE1, KLE2) im Stützteil (STU, STU1, STU2) und Kernteil (KER, KER1, KER2) eine gemeinsame Bohrung (BOR, BOR1, BOR2) zur Aufnahme des Verbindungsmittels (VER) aufweist.

4. Mitnehmeranordnung nach einem der Ansprüche 1 bis 3, **dadurch gekennzeichnet, dass** das Verbindungsmittel (VER) eine Schraubbolzen/Mutter-Verbindung ist.

5. Mitnehmeranordnung nach einem der Ansprüche 1 bis 3, **dadurch gekennzeichnet, dass** das Verbindungsmittel (VER) eine Bolzen/Keil-Verbindung ist.

6. Mitnehmeranordnung nach einem der Ansprüche 1 bis 5, **dadurch gekennzeichnet, dass** die Anschlussmittel (ANS, ANS1, ANS2) zur Befestigung der Klemmteil (KLE, KLE1, KLE2) an dem Bauelement Gewindebolzen sind.

7. Mitnehmeranordnung nach einem der Ansprüche 1 bis 6, **dadurch gekennzeichnet, dass** der Klemmteil (KLE, KLE1, KLE2) als einstückiges Schmiedeteil ausgebildet ist.

8. Mitnehmeranordnung nach einem der Ansprüche 1 bis 7, **dadurch gekennzeichnet, dass** zur Befestigung eines Bauteils zwei Klemmteilpaare (KLP, KLP1, KLP2) auf je einem stehenden Kettenglied (SKG, SKG1, SKG2) montierbar sind.
